# EUROPEAN PATENT APPLICATION

(11) **EP 4 534 177 A1**
(43) Date of publication of application: **09.04.2025**
(21) Application number: 23815890.1
(22) Date of filing: 24.05.2023
(51) Int. Cl.: B01D 53/04, B01D 53/14, B01D 53/26, F25B 1/00, F25B 13/00, F25B 47/02, F28F 1/32, F28F 9/02

(54) **CO2 ADSORPTION DEVICE**

(30) Priority: 31.05.2022 JP 2022088804
(71) Applicant: MITSUBISHI ELECTRIC CORPORATION, Chiyoda-ku Tokyo 100-8310 (JP)
(72) Inventor: ONAKA, Yoji, Tokyo 100-8310 (JP); IMADA, Katsuhiro, Tokyo 100-8310 (JP)
(74) Representative: Meissner Bolte Partnerschaft mbB
(86) International application number: PCT/JP2023/019255
(87) International publication number: WO 2023/234131

(57) **Abstract**

There is provided a CO₂ adsorption device in which a solid adsorption material (1) is installed, the CO₂ adsorption device including: a refrigeration cycle device that circulates a refrigerant in a compressor (2), a first heat exchanger (3), a decompressor (4), and a second heat exchanger (5); and a control device (9) that controls an operation of the refrigeration cycle device, in which the second heat exchanger (5) is installed on an upstream side of an air flow with respect to a location where the adsorption material (1) is installed, and the refrigeration cycle device performs a dehumidification operation of allowing the second heat exchanger (5) to function as an evaporator to cause moisture contained in the air flow to adhere to a surface of the second heat exchanger (5) during an adsorption operation of adsorbing CO₂.

## Description

### Technical Field

The present invention relates to a CO₂ adsorption device using a solid CO₂ adsorption material.

### Background Art

As a method of reducing the CO₂ concentration in the air or recovering CO₂ from exhaust gas, a method of using a solid CO₂ adsorption material has been known. As the CO₂ adsorption material, for example, a granular material in which a substance such as an amine compound that adsorbs CO₂ adheres to a surface of a carrier of a porous material is known. Such a solid CO₂ adsorption material is utilized for repeatedly adsorbing CO₂ by adsorbing CO₂ at room temperature or the like and then desorbing CO₂ by heating.

Many solid CO₂ adsorption materials are known to have adsorption abilities for gases other than CO₂. In a case where moisture (water vapor) in the air is adsorbed on the adsorption material, there is a problem that the adsorption ability of CO₂ of the adsorption material is decreased. Therefore, for example, in Patent Document 1, the moisture is reduced by the moisture adsorption rotor and then the CO₂ flows into the CO₂ adsorption material so that it is avoided impairing of the adsorption ability of the adsorption material.

### Citation List

### Patent Documents

Patent Document 1: Japanese Unexamined Patent Application, First Publication JP 2006- 61 758 A

### Summary of Invention

### Problem to be Solved by the Invention

In the moisture adsorption rotor of Patent Document 1, a material in which a moisture adsorption material is supported on a base material is used, in the same manner as in the CO₂ adsorption material. The moisture adsorption material is heated to desorb moisture and is repeatedly utilized as an adsorption material. However, there is a problem in terms of energy saving because the energy required for heating for the desorption is increased.

Therefore, an object of the present invention is to provide a CO₂ adsorption device using a solid CO₂ adsorption material, in which a decrease in CO₂ adsorption ability is prevented and energy saving is achieved.

### Means to Solve the Problem

According to the present invention, there is provided a CO₂ adsorption device in which a solid adsorption material that adsorbs CO₂ is installed in a flow path through which gas flows, the CO₂ adsorption device including: a refrigeration cycle device configured to circulate a refrigerant in a compressor, a first heat exchanger, a decompressor, and a second heat exchanger; and a control device configured to control an operation of the refrigeration cycle device, in which the second heat exchanger is installed on an upstream side of an air flow in the flow path with respect to a location where the adsorption material is installed, the refrigeration cycle device performs a dehumidification operation of allowing the second heat exchanger to function as an evaporator to cause moisture contained in the air flow to adhere to a surface of the second heat exchanger, during an adsorption operation of adsorbing CO₂, and the CO₂ adsorption device further includes a drain flow path that discharges water, which has fallen from the second heat exchanger, to an outside of the flow path, at a lower part of the second heat exchanger.

### Effects of the Invention

In the CO₂ adsorption device of the present invention, dehumidification is performed using a heat exchanger that functions as an evaporator of the refrigeration cycle device. Therefore, the energy required for heating, such as a moisture adsorption material, is not necessary. This makes the CO₂ adsorption device excellent in preventing a decrease in adsorption ability and in energy saving.

### Brief Description of the Drawings

FIG. 1 A configuration diagram of a CO₂ adsorption device according to Embodiment 1.
FIG. 2 A flowchart showing an example of control of a CO₂ adsorption device according to Embodiment 1.
FIG. 3 Aconfiguration diagram of a CO₂ adsorption device of a modification example according to Embodiment 1.
FIG. 4 Aconfiguration diagram of a CO₂ adsorption device according to Embodiment 2.
FIG. 5 Aconfiguration diagram of a CO₂ adsorption device according to Embodiment 3.
FIG. 6 Aconfiguration diagram of a CO₂ adsorption device according to Embodiment 4.
FIG. 7 A configuration diagram of a CO₂ adsorption device according to Embodiment 5.
FIG. 8 A configuration diagram of a CO₂ adsorption device according to Embodiment 6.
FIG. 9 A configuration diagram of a CO₂ adsorption device according to Embodiment 7.
FIG. 10 Aconfiguration diagram of a CO₂ adsorption device according to Embodiment 8.
FIG. 11 A configuration diagram of a CO₂ adsorption device according to Embodiment 9.

### Description of Embodiments

Hereinafter, embodiments of the CO₂ adsorption device of the present invention will be described with reference to the drawings. It should be noted that the drawings are exemplary examples of the configurations, and the disposition, size, direction, shape, and the like are not limited to the following description and can be appropriately changed. In addition, a part of the configurations disclosed in the following embodiments may be combined with or substituted for the configurations disclosed in other embodiments as long as there is no contradiction.

### Embodiment 1

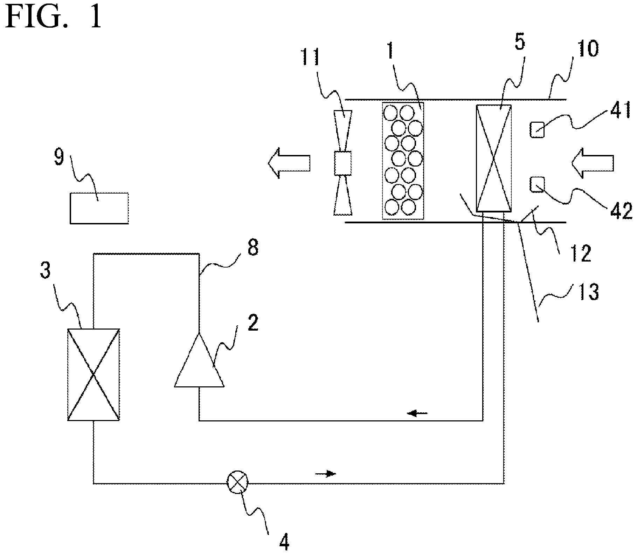

FIG. 1 is a configuration diagram of a CO₂ adsorption device according to Embodiment 1. The CO₂ adsorption device is a CO₂ adsorption device in which a solid adsorption material 1 that adsorbs CO₂ is installed in a flow path through which a gas flows. The adsorption material 1 is installed in an adsorption flow path 10, such as a duct, and the adsorption flow path 10 is configured to generate an air flow by a blower 11. The white arrows in FIG. 1 indicate the flow of the air flow. In the adsorption flow path 10, it is not always necessary to have the blower 11 when the air flow is generated, and when the blower 11 is installed, the blower 11 may be installed on either the upstream side or the downstream side of the adsorption material 1. The adsorption material 1 is installed to cover the entire flow path cross section of the adsorption flow path 10 such that the adsorption material 1 can be in contact with the entire air flow flowing through the adsorption flow path 10.

The gas that flows into the adsorption flow path 10 and is the target of the CO₂ adsorption is a gas including CO₂ and water vapor, and may include other gases such as air. The target gas is, for example, a gas having a relatively high CO₂ concentration, such as a combustion gas from a boiler or a gas emitted from alcohol fermentation, or a gas having a relatively low CO₂ concentration, such as outside air taken into a building for ventilating a room or air taken into a duct from indoors.

The adsorption material 1 is, for example, a material accommodating a particle of a porous material in a container in which air circulates inside and outside. A substance such as an amine compound that adsorbs CO₂ adheres to the surface of the particle. Since the substance that adsorbs CO₂ is a solid, the substance is described as a solid adsorption material in the present invention. The substance that adsorbs CO₂ may be integrated with the container by being fixed to the surface of a member such as a metal, a resin, or ceramics, in addition to being accommodated in the container.

The amount of CO₂ that can be adsorbed by the adsorption material 1 has an upper limit, and the adsorption material 1 that has adsorbed CO₂ can desorb the adsorbed CO₂ by heating, and can adsorb CO₂ again. The adsorption material 1 may adsorb not only CO₂ but also water vapor, and is preferable to reduce the water vapor from the target gas before the adsorption of CO₂.

The air flow in the adsorption flow path 10 comes into contact with the substance in the adsorption material 1 and flows. In this case, CO₂ is adsorbed on this substance, so that the CO₂ concentration on the downstream side of the adsorption material 1 is lower than the CO₂ concentration on the upstream side of the adsorption material 1. When CO₂ is adsorbed until the adsorption material 1 approaches the upper limit value in which CO₂ can be adsorbed, the adsorption ability is decreased.

It is preferable to replace the adsorption material 1 with sufficient adsorption ability for each appropriate time when the adsorption amount approaches the upper limit value. Although the example of the adsorption material 1 being left to stand in the adsorption flow path 10 is shown in FIG. 1, for example, a rotor-type adsorption material 1 that alternately repeats adsorption and desorption through rotation, as described in the prior art, may also be used.

The CO₂ adsorption device includes a vapor compression type refrigeration cycle device in which a compressor 2, a first heat exchanger 3, a decompressor 4, and a second heat exchanger 5 are connected to each other by a pipe 8 such that a refrigerant circulates. The operation state of the compressor 2, the decompressor 4, and the like in the refrigeration cycle device is controlled by a control device 9. In the refrigeration cycle device, the refrigerant is sucked into the compressor 2 in a gas state, compressed into a high-temperature and high-pressure gas, and discharged. The refrigerant then condenses in the first heat exchanger 3, which functions as a condenser, into a liquid state.

Subsequently, the refrigerant is decompressed in the decompressor 4 into a low-temperature and low-pressure refrigerant. As the refrigerant, it is desirable to use a hydrofluorolefin with a global warming potential (GWP) of 10 or less, a hydrocarbon, or CO₂ as the main component. The refrigerant evaporates in the second heat exchanger 5, which functions as the evaporator, into a gas and is then sucked into the compressor 2 again. Arrows in FIG. 1 indicate the direction in which the refrigerant flows. The heat exchanger that functions as a condenser discharges heat to the outside, and the heat exchanger that functions as an evaporator absorbs heat from the outside. The control device 9 adjusts the surface temperatures of the first heat exchanger 3 and the second heat exchanger 5 by operating the compressor 2, adjusting the opening degree of the decompressor 4, or the like.

The second heat exchanger 5 is installed on the upstream side of the air flow from the location where the adsorption material 1 is installed in the adsorption flow path 10. The refrigeration cycle device is operated such that the second heat exchanger 5 functions as the evaporator, and the second heat exchanger 5 performs heat exchange with the air flow in the adsorption flow path 10. In the refrigeration cycle device, the type and pressure of the refrigerant are selected such that the surface temperature of the second heat exchanger 5, which functions as the evaporator, is sufficiently lower than the temperature of the upstream air flow. The refrigeration cycle device cools the moisture (water vapor) included in the air flow in the adsorption flow path 10, condensing the moisture into liquid water on the surface of the second heat exchanger 5 or causing the moisture to adhere as solid frost, thereby performing dehumidification.

In a case where the temporal variation in the flow velocity, temperature, humidity, or the like of the air flow flowing into the adsorption flow path 10 is small, the refrigeration cycle device may be operated under fixed conditions without performing control based on the temperature and humidity of the air flow. However, in a case where the temperature and humidity of the air flow vary, even when the air flow in the adsorption flow path 10 is cooled, the air flow may not be dehumidified unless the temperature of the second heat exchanger 5 is equal to or lower than the saturation temperature of the water vapor in the air flow. Therefore, it is desirable that the control device 9 controls the operation of the compressor 2, the decompressor 4, and the like so that the dehumidification operation is performed by the refrigeration cycle device, whereby the second heat exchanger 5 reaches an appropriate temperature based on the temperature and humidity of the air flow upstream of the second heat exchanger 5.

FIG. 1 shows an example in which a temperature sensor 41 and a humidity sensor 42 are installed on the upstream side of the second heat exchanger 5 in the air flow to measure the temperature and humidity of the air flow that flows into the adsorption flow path 10. The temperature sensor 41 and the humidity sensor 42 do not need to be installed in the adsorption flow path 10.

In addition, in a case where the temperature and humidity of the air flow flowing into the adsorption flow path 10 can be measured or estimated by another means, the control device 9 may perform controls based on information thereof. Although the temperature sensor 41 and the humidity sensor 42 are shown in FIG. 1, the temperature sensor 41 and the humidity sensor 42 may be omitted for simplicity in the following embodiments.

In the second heat exchanger 5, for example, fins are attached to a heat transfer pipe through which the refrigerant flows, thereby increasing the heat exchange area between the refrigerant and the air. The fins are installed with intervals therebetween such that the air flow in the adsorption flow path 10 flows from the upstream side to the downstream side, and preferably have a shape and structure that allows water adhering to the surface of the fins to be easily drained by gravity. For example, the second heat exchanger 5 may be a circular pipe heat exchanger, a finless heat exchanger, or the like. In addition, it is preferable that the second heat exchanger 5 is a heat exchanger having fins with a drainage hole formed. In particular, in a flat pipe heat exchanger using corrugated fins, it is preferable that a louver slit for improving contact with the air flow is formed, and it is also preferable that a drainage hole and a drainage slit are formed in addition to the louver slit.

In addition, the finless heat exchanger has an excellent drainage property because there are no fins to which water is likely to adhere. The second heat exchanger 5 may be a heat exchanger with a surface made of a water-repellent material such as a fluorine compound. The second heat exchanger 5 may have a structure in which the fins joined to the heat transfer pipes extend from the heat transfer pipes to the upstream side of the air flow, but do not extend to the downstream side of the air flow or extend less on the downstream side of the air flow than on the upstream side of the air flow. The second heat exchanger 5 is installed to cover the entire flow path cross section of the adsorption flow path 10 so that the second heat exchanger 5 can be in contact with the entire air flow flowing through the adsorption flow path 10.

A drain pan 12 that receives the water flowing down from the second heat exchanger 5 and a drain pipe 13 that discharges the water received by the drain pan 12 to the outside of the adsorption flow path 10 are connected to each other at a lower part of the second heat exchanger 5. The drain pan 12 and the drain pipe 13 are drain flow paths discharging the water that has fallen from the second heat exchanger 5 to the outside of the adsorption flow path 10.

It is preferable that the drain pan 12 has a structure in which the fallen water does not flow to the adsorption material 1 side. When water accumulates on the downstream side of the second heat exchanger 5, the water accumulated in the drain pan 12 may re-evaporate due to the air flow in the adsorption flow path 10, potentially reducing the dehumidification effect toward the adsorption material 1 side.

Therefore, for example, as shown in FIG. 1, the bottom of the drain pan 12 preferably may be inclined or provided with a step such that the downstream side of the bottom of the drain pan 12 (adsorption material 1 side) becomes higher and the windward side becomes lower, whereby the water falling from the second heat exchanger 5 flows to the upstream side of the second heat exchanger 5 and is accumulated. In addition, the upper part of the downstream side of the second heat exchanger 5 of the drain pan 12 may be covered with a cover (not shown) or the like.

In addition, since the performance of the adsorption material 1 significantly deteriorates when water adheres to the adsorption material 1, the adsorption material 1 and the second heat exchanger 5 are installed with an interval therebetween to prevent water adhering to the second heat exchanger 5 from adhering to the adsorption material 1. The extending direction of the adsorption flow path 10 is not particularly limited, but it is desirable that the second heat exchanger 5 is not directly above the adsorption material 1 and is positioned to be deviated horizontally so that water does not fall from the second heat exchanger 5 to the adsorption material 1. In addition, in order to prevent water carried by the air flow from the second heat exchanger 5 from adhering to the adsorption material 1, a louver or the like may be installed between the second heat exchanger 5 and the adsorption material 1.

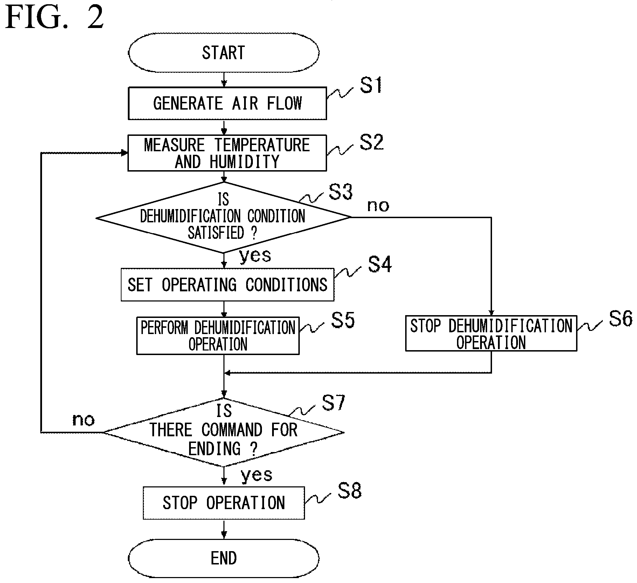

FIG. 2 is a flowchart showing an example of the control of the CO₂ adsorption device. When the control is started, first, an air flow is generated in the adsorption flow path 10 by operating the blower 11 or the like (step S1). It should be noted that, in a case where the adsorption flow path 10 is always a flow path in which an air flow is generated, the step S1 may be omitted. In addition, in a case where the adsorption flow path 10 is a flow path in which an air flow is generated intermittently, the generation of the air flow may be confirmed as step S1. Next, the temperature and humidity of the air flow flowing into the adsorption flow path 10 are measured (step S2). Then, the control device 9 controls the operation of the refrigeration cycle device based on the temperature and humidity of the air flow upstream of the second heat exchanger obtained in step S2.

The control device 9 confirms whether the temperature and humidity of the air flow are within a valid range for dehumidification using the refrigeration cycle device (step S3). In a case where the humidity is lower than a predetermined value (for example, less than the relative humidity of 20 %), or the temperature is lower than a predetermined value, or the relationship between the temperature and humidity does not satisfy a certain relationship, the dehumidification operation is not performed (step S6).

On the other hand, when the temperature and humidity are within the valid range, the dehumidification operation is performed. In this case, the temperature of the surface of the second heat exchanger 5 is set to be lower than the temperature at which the water vapor in the air flow becomes saturated water vapor, based on the values of the temperature and humidity (step S4).

In a case where the temperature of the second heat exchanger 5 is significantly lowered even when the humidity is low, dehumidification is possible, but the amount of water that can be dehumidified with respect to the electric power required for the refrigeration cycle device is small, resulting in low dehumidification efficiency. In addition, when the temperature is low, the amount of water contained in the air flow is small, resulting in low dehumidification efficiency.

In these conditions, even when the refrigeration cycle device does not perform dehumidification, the decrease in adsorption ability of the adsorption material 1 is suppressed because the humidity is low. In addition, since the refrigeration cycle device does not perform the dehumidification operation under such conditions, energy saving is achieved.

In a case where the temperature and humidity of the air flow flowing into the adsorption flow path 10 are high, the water vapor in the air flow can condense into water to be dehumidified. For example, in a case where the temperature of the air flow flowing into the adsorption flow path 10 is sufficiently higher than 0 °C (for example, 15 °C or higher) and the humidity is high (for example, the relative humidity of 50 % or higher), the temperature of the second heat exchanger 5 can be set to, for example, 0 °C to 5 °C to perform dehumidification.

On the other hand, in a case where the temperature and humidity of the air flow are low, the water vapor in the air flow can be dehumidified by converting the water vapor into ice (frost). For example, in a case where the temperature of the air flow flowing into the adsorption flow path 10 is 5 °C or lower, or the relative humidity is less than 30 %, the temperature of the second heat exchanger 5 is set to a temperature lower than 0 °C, for example, -10 °C to -5 °C, and the water vapor in the air flow adheres to the second heat exchanger 5 as frost, resulting in dehumidification. It should be noted that in a case where the temperature and humidity are in the intermediate range thereof, whether the dehumidification is performed as condensed water or as frost may be determined based on a predetermined condition table or the like.

The refrigeration cycle device performs the dehumidification operation based on the operating conditions obtained in step S4 (step S5). It is determined whether a signal of a command for ending the adsorption operation from the outside is input for each unit time (for example, 10 seconds) during the dehumidification operation of step S5 or during the stop of the dehumidification operation of step S6 (step S7). In a case where it is determined that the end command is input in step S7, the operation related to the dehumidification operation is stopped (step S8), and the adsorption operation is ended. In a case where the end command is not input, the process returns to step S2 again, the temperature and humidity are measured. Subsequently, the operating conditions are reviewed as in S4 to S6.

In the dehumidification operation of step S5, in a case where dehumidification is performed by adhering frost to the second heat exchanger 5, when the amount of frost adhering to the second heat exchanger 5 increases, the air flow becomes difficult to flow through. Therefore, the control device 9 allows the refrigeration cycle device to perform a defrosting operation to remove the frost regularly. In general, during the defrosting operation, the temperature of the second heat exchanger 5 is raised, melting the frost adhering to the second heat exchanger 5 and causing the frost to fall as water.

The defrosting operation may stop the refrigeration cycle device and raise the temperature of the second heat exchanger 5. In addition, it is preferable to stop the air flow in the adsorption flow path 10 during the dehumidification operation so that the water evaporated from the water flowing through the second heat exchanger 5 is not directed to the adsorption material. In addition, when it is difficult to perform the dehumidification operation, the dehumidification operation may be performed only under the condition of dehumidifying as condensed water.

As described above, the CO₂ adsorption device of Embodiment 1 removes the water vapor by using the heat exchanger that functions as the evaporator of the refrigeration cycle device. In a configuration in which the moisture adsorption material is used for dehumidification as in the related art, since the moisture and the moisture adsorption material are strongly bonded to each other, the energy required for desorption is increased, which is a problem in terms of energy saving.

As in Embodiment 1, in a configuration in which cooling and dehumidification are performed by the evaporator, the water generated by the dehumidification can be easily discharged, and the configuration is excellent in terms of preventing the decrease in CO₂ adsorption ability and energy saving. In addition, when the CO₂ adsorption device includes the control device 9 that controls the operation of the refrigeration cycle device based on the temperature and humidity of the air flow upstream of the second heat exchanger 5, it is possible to further reduce the energy required for dehumidification.

In addition, the dehumidification configuration of Embodiment 1 may be combined with a dehumidification configuration using a moisture adsorption material. It is possible to perform dehumidification by the refrigeration cycle device on the upstream side of the moisture adsorption material, and reduce the energy required for regenerating the moisture adsorption material due to the decrease of the amount of moisture adsorbed by the moisture adsorption material.

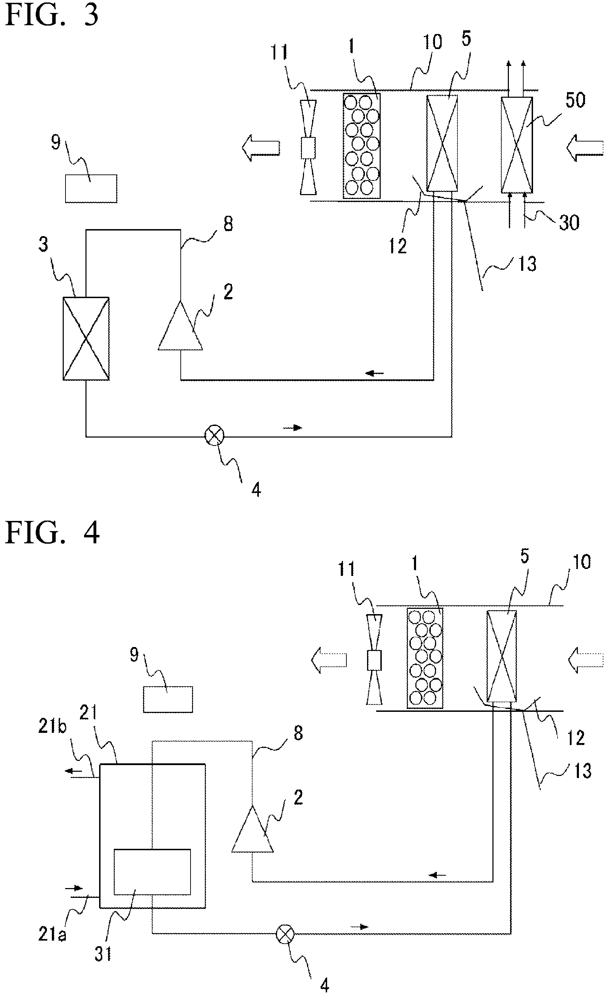

FIG. 3 is a configuration diagram of a CO₂ adsorption device of a modification example according to Embodiment 1. In the CO₂ adsorption device of the modification example, a stationary type total heat exchanger 50 is installed on the upstream side of the adsorption flow path 10 with respect to the second heat exchanger 5. The total heat exchanger 50 is connected to a ventilation flow path 30 through which an air flow different from the air flow flowing into the adsorption flow path 10 flows. The total heat exchanger 50 performs total heat exchange between the air flow flowing into the adsorption flow path 10 and the air flow flowing through the ventilation flow path 30.

A typical stationary type total heat exchanger 50 has a structure in which flow paths, partitioned by sheets and independent of each other, are alternately stacked. Since the sheets have both heat transfer properties and moisture permeability, the total heat exchanger 50 can continuously perform both sensible heat exchange and latent heat exchange between the two air flows. Since such a stationary type total heat exchanger 50 does not require power, energy-saving heat exchange can be achieved. By allowing an air flow with lower humidity than that in the adsorption flow path 10 to flow through the ventilation flow path 30, the humidity of the air flow flowing into the adsorption flow path 10 can be lowered. Therefore, in the CO₂ adsorption device of the modification example, the load of dehumidification by the second heat exchanger 5 is reduced, resulting in energy saving.

### Embodiment 2

FIG. 4 is a configuration diagram of a CO₂ adsorption device according to Embodiment 2. The CO₂ adsorption device of Embodiment 2 is a first heat exchanger 31 that performs heat exchange with water, which functions as the condenser of the CO₂ adsorption device of Embodiment 1. The heat exchanger that performs heat exchange with water has better heat exchange performance and is easier to reduce the size of the heat exchanger than a heat exchanger that performs heat exchange with gas. In the heat exchanger that performs heat exchange with water, a flow of water is also required, but the efficiency of heat exchange is better than that of a gas, and heat exchange utilizing water convection or the like is also effective.

Therefore, it is possible to reduce the energy required for allowing the fluid to flow. In addition, when combined with a facility that utilizes water, the pressure of the water supply can be utilized to generate the flow of water, thereby saving the electric power required for generating the water flow. In the present invention, a liquid in which the main component is water is described as water, even when inorganic substances or organic substances are dissolved in the liquid or non-dissolved substances are mixed in a flowable manner in the liquid.

The CO₂ adsorption device shown in FIG. 4 includes a container 21 that allows inflow and outflow of water and stores water, and the first heat exchanger 31 is a heat source that heats the water stored in the container 21. The first heat exchanger 31 is a heat exchanger that functions as a condenser during the dehumidification operation described as the first heat exchanger 3 in the above-described embodiment.

In the first heat exchanger 31, for example, fins are attached to a heat transfer pipe through which the refrigerant flows, thereby increasing the heat exchange area between the refrigerant and the water. In addition, the first heat exchanger 31 may have a structure in which the flow path through which the refrigerant flows and the flow path through which the water flows are partitioned by a plate for heat exchange.

It is not essential but preferable that the container 21 is a part of hot water supply equipment that supplies hot water inside a building. The container 21 is provided with an inflow port 21a at the lower part for cold water to flow in and an outflow port 21b at the upper part for heated water (hot water) to flow out, and the first heat exchanger 31 is installed at the lower part inside the container 21. The container 21 is filled with water. The cold water flowing in from the inflow port 21a is heated by the first heat exchanger 31 and flows out from the outflow port 21b as hot water.

The water may be heated when the water is not flowing in from the inflow port 21a. In that case, convection occurs in the water heated by the first heat exchanger 31, thereby heating the water in the container 21. In addition, when the container 21 has an appropriate heat insulating property, the heat of the heated water does not immediately decrease. Therefore, the water can store heat as hot water. The heated water (hot water) flowing out from the container 21 can be utilized as hot water for bath, room heating, or the like. The water in the container 21 may be utilized as another heat source without being directly utilized as water.

In addition, the first heat exchanger 31 may be configured to discharge heat to water during the dehumidification operation in which the second heat exchanger 5 functions as an evaporator, and it is not always necessary to utilize the discharged heat of the first heat exchanger 31 during the dehumidification operation. For example, in a configuration where the refrigeration cycle device includes another heat exchanger (not shown) connected in parallel with the second heat exchanger 5 and either of the heat exchangers can be switched to function as an evaporator, the discharged heat of the first heat exchanger 31 may be utilized when the other heat exchanger functions the evaporators.

Similarly, it is not always necessary to utilize the discharged heat of the first heat exchanger 31 to heat water during the dehumidification operation of the second heat exchanger 5. For example, the refrigeration cycle device may include another heat exchanger (not shown) in parallel with the first heat exchanger 31, and may be configured to switch the other heat exchanger to function as a condenser during the dehumidification operation of the second heat exchanger 5.

As described above, the CO₂ adsorption device of Embodiment 2 uses the first heat exchanger 31, which functions as a condenser, as a heat exchanger that performs heat exchange with water. Therefore, it is possible to reduce the energy required for generating the flow in the fluid that performs heat exchange with the refrigerant of the refrigeration cycle, thereby achieving energy saving. In addition, since the hot water supply equipment that supplies hot water inside the building is configured using the container 21 that allows the inflow and outflow of water and stores water, and the heat discharged from the first heat exchanger 31 during the dehumidification operation can be effectively utilized, it is effective in energy saving.

### Embodiment 3

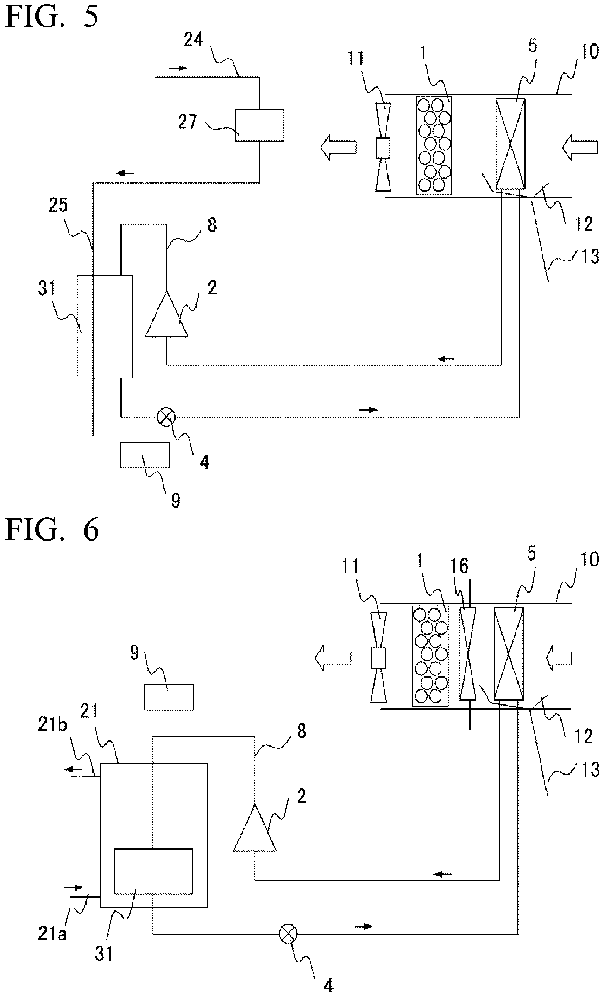

FIG. 5 is a configuration diagram of a CO₂ adsorption device according to Embodiment 3. The CO₂ adsorption device of Embodiment 3 is the first heat exchanger 31 that performs heat exchange with water, which functions as a condenser, in the same manner as the CO₂ adsorption device of Embodiment 2. The condenser of the CO₂ adsorption device of Embodiment 3 performs heat exchange with drained water of water utilization equipment 27.

The water utilization equipment 27 is, for example, a device that cools heat-generating components using cooling water or cleaning equipment that utilizes water. The water that has entered the water utilization equipment 27 from the water supply pipe 24 is drained through a drainage pipe 25 after utilization. The first heat exchanger 31 can be a heat exchanger in which a refrigerant pipe is wound around the drainage pipe 25, or a heat exchanger placed inside a drainage tank similar to the container in Embodiment 3, so that the first heat exchanger 31 performs heat exchange with the water in the drainage pipe 25. The drained water heated by the first heat exchanger 31 is guided to drainage treatment equipment outside the building.

The CO₂ adsorption device of Embodiment 4 uses the first heat exchanger 31, which functions as a condenser, as a heat exchanger that performs heat exchange with water. Therefore, it is possible to reduce the energy required for generating the flow in the fluid that performs heat exchange with the refrigerant of the refrigeration cycle, thereby achieving energy saving. In addition, since the flow of the water is generated by the pressure of the water entering the water utilization equipment 27, it is possible to save energy for allowing the water to flow.

### Embodiment 4

FIG. 6 is a configuration diagram of a CO₂ adsorption device according to Embodiment 5. In addtion to the CO₂ adsorption devices of the above-described embodiments, the CO₂ adsorption device of Embodiment 5 further includes a temperature-raising heat exchanger 16, in which a fluid having a temperature higher than the temperature of the refrigerant flowing through the second heat exchanger 5 flows, between the second heat exchanger 5 and the adsorption material 1. The temperature-raising heat exchanger 16 is located on the downstream side of the second heat exchanger 5 in the air flow of the adsorption flow path 10 and is located on the upstream side of the adsorption material 1. The temperature-raising heat exchanger 16 performs heat exchange between the air flow that is cooled during dehumidification in the second heat exchanger 5 and the fluid that flows inside the temperature-raising heat exchanger 16, thereby raising the temperature of the air flow that passes through the temperature-raising heat exchanger 16 and flows toward the adsorption material 1.

The fluid flowing inside the temperature-raising heat exchanger 16 may be, for example, the water in the container 21 described in Embodiment 2, the drained water described in Embodiment 3, additionally, a heat generating device or exhaust gas, and may also be configured as embodiments in the following description. It is desirable that the temperature-raising heat exchanger 16 has a heat discharge amount sufficient to raise the temperature of the air flow toward the adsorption material 1 to the same extent as the air flow that flows into the adsorption flow path 10.

However, when the temperature of the air flow toward the adsorption material 1 becomes excessively high, there is a concern that the adsorption performance of the adsorption material 1 may deteriorate. The temperature of the air flow toward the adsorption material 1 may be set to a temperature between the temperature of the air flow flowing into the adsorption flow path 10 and the temperature of the air flow immediately downstream of the second heat exchanger 5. FIG. 6 shows a configuration in which the water in the container 21 is heated by the first heat exchanger 31 that functions as a condenser, in the same manner as in Embodiment 2, and the temperature of the air flow toward the adsorption material 1 may be appropriately increased by allowing some of the water in the container 21 to flow into the temperature-raising heat exchanger 16.

The CO₂ adsorption ability of the adsorption material 1 is improved by cooling the air flow, but the moisture absorbing amount may be increased at the same time. Therefore, by increasing the temperature of the air flow, the relative humidity can be lowered, and moisture absorption can be suppressed. As a result, it is possible to prevent the moisture absorption of the adsorption material 1 and to improve the CO₂ adsorption ability with respect to the moisture absorption.

In addition, when the temperature of the air flow is lowered, the temperature of the adsorption material 1 is also lowered. In a case where the operation of CO₂ adsorption is stopped, when the adsorption material 1 is also maintained at a low temperature, there is a concern that the adsorption material 1 may deteriorate due to condensation. According to the CO₂ adsorption device of Embodiment 5, the temperature of the air flow cooled when dehumidified by the second heat exchanger 5 is raised by the temperature-raising heat exchanger 16, so that the CO₂ adsorption ability can be improved, or the deterioration of the adsorption material 1 can be prevented.

### Embodiment 5

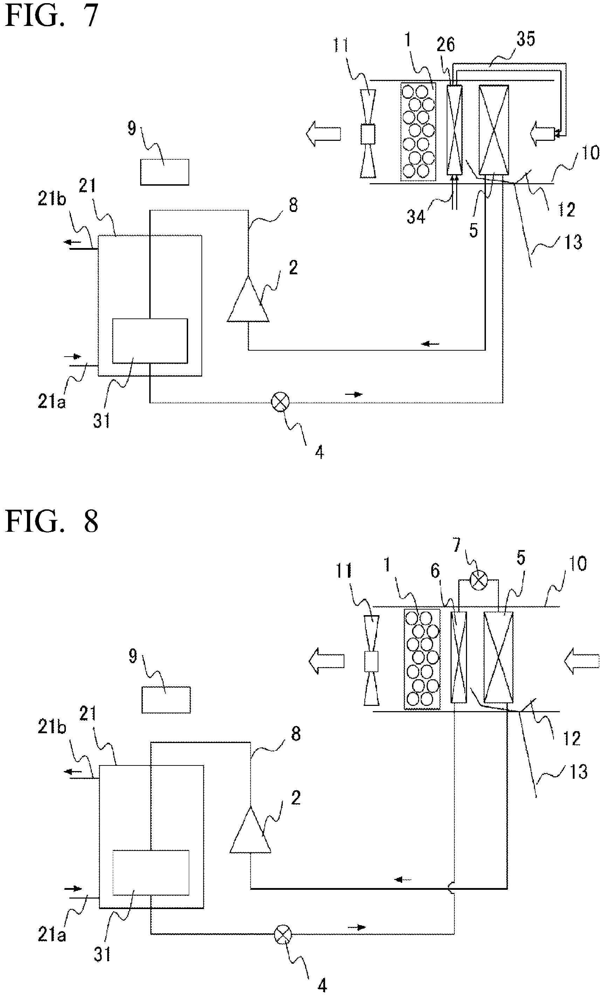

FIG. 7 is a configuration diagram of a CO₂ adsorption device according to Embodiment 5. The CO₂ adsorption device of Embodiment 5 is configured such that the temperature-raising heat exchanger 16 of the CO₂ adsorption device of Embodiment 4 is used as a heat exchanger 26 that performs heat exchange between the air flow to be adsorbed with CO₂ and the air flow after dehumidification by the second heat exchanger 5. The air flow to be adsorbed with CO₂ is guided to the heat exchanger 26 in a flow path 34 and is heat-exchanged with the air flow downstream of the second heat exchanger 5 by the heat exchanger 26.

The air flow that flows through the heat exchanger 26 from the flow path 34 is guided upstream of the second heat exchanger 5 in the adsorption flow path 10 through a flow path 35. That is, the heat exchanger 26 performs heat exchange between the air flow upstream of the second heat exchanger 5 and the air flow downstream of the second heat exchanger 5. As the heat exchanger 26, for example, a heat exchanger, in which the air flow downstream of the second heat exchanger 5 and the air flow passing through the inside of the heat exchanger 16 are partitioned by a thin plate, can be used.

In Embodiment 5, the heat exchanger 26 is cooled by the air flow downstream of the second heat exchanger 5, which potentially cause condensation inside the heat exchanger 16. The heat exchanger 16 may include a drainage path (not shown) for discharging the condensed water generated inside to the outside.

According to the CO₂ adsorption device of Embodiment 5, the temperature of the air flow cooled when dehumidified by the second heat exchanger 5 is raised by the heat exchanger 26, in the same manner as in Embodiment 4, so that the CO₂ adsorption ability can be improved, or the deterioration of the adsorption material 1 can be prevented. In addition, since the air flow guided into the inside of the heat exchanger 16 is generated by the air flow flowing through the adsorption flow path 10, it is not necessary to provide a blower or the like, resulting in energy saving.

### Embodiment 6

FIG. 8 is a configuration diagram of a CO₂ adsorption device according to Embodiment 6. The CO₂ adsorption device of Embodiment 6 is configured such that the temperature-raising heat exchanger 16 of Embodiment 4 is used as the third heat exchanger 6 through which the refrigerant of the refrigeration cycle device flows. The third heat exchanger 6 is connected to the pipe 8 between the first heat exchanger 31 and the second heat exchanger 5. In addition, a second decompressor 7 is provided between the third heat exchanger 6 and the second heat exchanger 5. Although FIG. 8 shows a configuration of the first heat exchanger 31 in which the heat exchanger, which functions as a condenser, performs heat exchange with water in the container 21, the heat exchanger may be the first heat exchanger 3 in which the condenser performs heat exchange with the air flow.

The refrigerant that is discharged from the compressor 2 and flows from the first heat exchanger 31 to the third heat exchanger 6 is decompressed by the second decompressor 7 and flows to the second heat exchanger 5. When the pressure of the refrigerant flowing into the third heat exchanger 6 is kept higher than the pressure of the refrigerant flowing into the second heat exchanger 5 by the second decompressor 7, the temperature of the third heat exchanger 6 can be made higher than the temperature of the second heat exchanger 5. As a result, the air flow that had passed through the second heat exchanger 5 and that had been cooled can be heated by the third heat exchanger 6 and directed to the adsorption material 1.

With such a configuration, the third heat exchanger 6 functions as a condenser, and the air flow can be heated by the heat generated when the refrigerant condenses. In addition, even when the refrigerant does not condense, the temperature of the third heat exchanger 6 is higher than the temperature of the second heat exchanger 5. Therefore, the air flow that had passed through the second heat exchanger 5 and that had been cooled can be heated.

In addition, when the second decompressor 7 is configured such that the opening degree of a valve through which the refrigerant flows is variable, or such that a flow path with a narrowed opening degree and a flow path with an un-narrowed opening degree can be switched, it is preferable because the temperature of the third heat exchanger 6 can be adjusted. With this configuration, the third heat exchanger 6 can also be utilized for dehumidification in the same manner as in the second heat exchanger 5 by using the third heat exchanger 6 as the evaporator without performing the decompression by the second decompressor 7.

The refrigeration cycle device may be controlled to switch between adjusting the decompression of the second decompressor 7 according to the temperature and humidity of the air flow to lower the temperature of the third heat exchanger 6 for the purpose of dehumidification, or using the third heat exchanger 6 to heat the air flow after dehumidification by the second heat exchanger 5.

According to the CO₂ adsorption device of Embodiment 6, the temperature of the air flow cooled when dehumidified by the second heat exchanger 5 is raised by the third heat exchanger 6, in the same manner as in Embodiment 4, so that the CO₂ adsorption ability can be improved, or the deterioration of the adsorption material 1 can be prevented. In addition, since the temperature of the third heat exchanger 6 can be adjusted by the second decompressor 7, the function of the third heat exchanger 6 can be changed depending on the situation.

### Embodiment 7

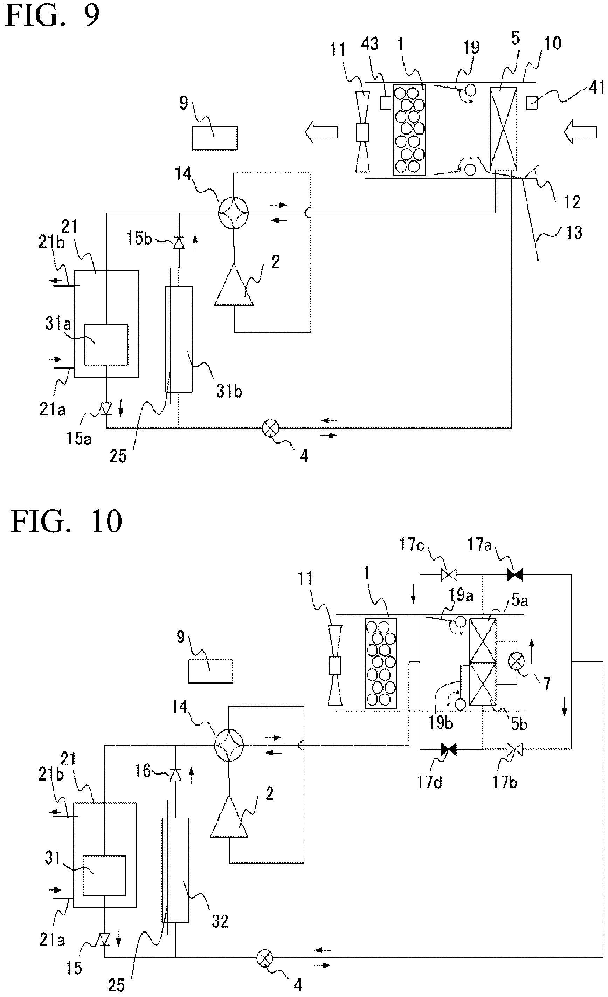

FIG. 9 is a configuration diagram of a CO₂ adsorption device according to Embodiment 7. The CO₂ adsorption device of Embodiment 7 includes a switching valve 14 that switches the flow of the refrigerant in the refrigeration cycle device. The switching valve 14 switches the flow direction of the refrigerant in the refrigeration cycle device so that the function of the first heat exchanger 3 and the function of the second heat exchanger 5 are switched between the condenser and the evaporator. It should be noted that Embodiment 7 is configured such that the first heat exchanger 3 includes a first heat exchanger 31a and a first heat exchanger 31b. Although the switching valve 14 is described as a four-way valve in FIG. 9, a configuration in which a plurality of valves are combined may be adopted.

The first heat exchanger 31a and the first heat exchanger 31b are connected in parallel, and the refrigerant flow path is configured such that the refrigerant flows through the first heat exchanger 31a when functioning as a condenser, and the refrigerant flows through the first heat exchanger 31b when functioning as an evaporator. As an example, FIG. 9 shows a configuration in which the refrigerant flow path uses check valves 15a and 15b. The path between the switching valve 14 and the decompressor 4 is divided into a flow path through the first heat exchanger 31a and a flow path through the first heat exchanger 31b. The check valve 15a that allows the refrigerant discharged from the compressor 2 to flow from the switching valve 14 to the decompressor 4 and prevents the refrigerant from flowing in the reverse direction is installed in the flow path through the first heat exchanger 31a. The check valve 15b that allows the refrigerant to flow from the decompressor 4 to the switching valve 14 and prevents the refrigerant from flowing in the reverse direction is installed in the flow path through the first heat exchanger 31b. The refrigerant flow path may be configured with an opening/closing valve instead of the check valves 15a and 15b.

The heat discharged from the first heat exchanger 31a, which functions as a condenser, is utilized for hot water supply or the like in the same manner as in Embodiment 2. The heat supplied to the first heat exchanger 31b, which functions as the evaporator, is provided from the drainage in the same manner as in Embodiment 3. By separating the first heat exchanger 31a through which the refrigerant flows when functioning as a condenser, and the first heat exchanger 3 1b through which the refrigerant flows when functioning as an evaporator, the heat discharged from the first heat exchanger 31a can be efficiently utilized.

Next, the operation according to Embodiment 7 will be briefly described. In the adsorption operation where CO₂ is adsorbed in the same manner as in Embodiment 1, the switching valve 14 is basically set such that the second heat exchanger 5 functions as the evaporator. The control device 9 allows the second heat exchanger 5 to function as an evaporator, lowering the surface temperature of the second heat exchanger 5 to the temperature below freezing, and performs a dehumidification operation by causing the water vapor in the air flow to adhere to the second heat exchanger 5 as frost.

The control device 9 allows the refrigeration cycle device to perform the dehumidification operation of an appropriate time and then allows the refrigeration cycle device to perform the defrosting operation to remove the frost adhering to the second heat exchanger 5. The control device 9 switches the switching valve 14 to allow the second heat exchanger 5 to function as a condenser, thereby removing the frost adhering to the second heat exchanger 5. In a case where the second heat exchanger 5 functions as a condenser, the temperature of the second heat exchanger 5 becomes high, and the frost is rapidly removed, performing the CO₂ adsorption operation well again. In the case of performing the defrosting operation, it is preferable that the blower 11 is stopped.

In addition, the control device 9 may allow the second heat exchanger 5 to function as a condenser after the dehumidification operation, in which the second heat exchanger 5 functions as an evaporator, is ended, and may perform a temperature-raising operation to raise the temperature of the adsorption material 1 cooled by the dehumidification operation. In this case, while frost and water adhere to the surface of the second heat exchanger 5, the air flow is not allowed to flow. After the temperature of the surface of the second heat exchanger 5 reaches a temperature of the air flow that can be sufficiently raised in the adsorption flow path 10, the air flow is allowed to flow toward the adsorption material 1.

The temperature of the second heat exchanger 5 is adjusted such that the raised temperature of the adsorption material 1 is sufficiently lower than the temperature required for desorbing CO₂ from the adsorption material 1. The adsorption material 1, which is cooled during the dehumidification operation, is heated by the air flow that has been heated. In conditions where the amount of water vapor in the air flow is large, there is a concern of condensation on the surface of the adsorption material 1 even when using the heated air flow. Therefore, the humidity of the air flow may be confirmed with the humidity sensor 42, and the temperature-raising operation may be performed when the humidity is equal to or lower than a predetermined level.

In a case where such a temperature-raising operation is not performed, after the dehumidification operation is ended, the adsorption material 1 performs heat exchange with the surrounding gas and the temperature of the adsorption material 1 gradually approaches the temperature of the surrounding gas. However, when the humidity of the surrounding gas varies, condensation may occur on the surface of the adsorption material 1, leading to potential deterioration of the adsorption material 1. Since the adsorption material 1 is heated using the heated air flow, it is possible to prevent deterioration due to condensation.

FIG. 9 shows a configuration in which a temperature sensor 43 is installed downstream of the adsorption material 1 in addition to the temperature sensor 41 upstream of the adsorption material 1. The control device 9 may adjust the air flow amount of the temperature-raising operation or may end the temperature-raising operation based on the temperature downstream of the adsorption material 1.

In addition, the CO₂ adsorption device shown in FIG. 9 includes a damper 19 between the second heat exchanger 5 and the adsorption material 1. The damper 19 is a movable shielding member that is switched to allow or prevent the air flow from the second heat exchanger 5 toward the adsorption material 1. The damper 19 may perform an opening/closing operation by attaching a shielding plate to a rotation shaft and rotating the rotation shaft, or the damper 19 may perform an opening/closing operation by the shielding plate being slid. The damper 19 is opened when the second heat exchanger 5 functions as the evaporator, allowing the air flow to pass through the second heat exchanger 5 and being directed to the adsorption material 1.

Therefore, the damper 19 is closed when the second heat exchanger 5 does not function as an evaporator, preventing the air flow from passing through the second heat exchanger 5 and being directed to the adsorption material 1. The case where the second heat exchanger 5 does not function as the evaporator refers to the case where the second heat exchanger 5 functions as the condenser, or the case where the refrigeration cycle device is stopped, or the like. The surface of the second heat exchanger 5 may be dry, but when the second heat exchanger 5 functions as the condenser while water adheres thereto, water vapor is generated.

When this water vapor flows into the adsorption material 1, there is a concern that the performance of the adsorption material 1 may deteriorate. In addition, when the refrigeration cycle device is stopped, there is a concern that the performance of the adsorption material 1 may deteriorate when a high-humidity air flow flows through the adsorption flow path 10. Therefore, the damper 19 is closed to prevent high-humidity air flow from flowing to the adsorption material 1. It should be noted that, even in a case where the switching valve 14 that switches the flow of the refrigerant of the refrigeration cycle device is not provided, as in Embodiment 1, the air flow may be prevented from flowing when the refrigeration cycle device is stopped by the shielding member.

### Embodiment 8

FIG. 10 is a configuration diagram of a CO₂ adsorption device according to Embodiment 8. The CO₂ adsorption device of Embodiment 8 has a configuration in which the second heat exchanger 5 installed in the adsorption flow path 10 is divided into a plurality of second heat exchangers 5. In the CO₂ adsorption device of Embodiment 8, a region of the adsorption flow path 10 through which the air flow flows is divided into a plurality of regions, and the second heat exchanger 5 is divided into a plurality of second heat exchangers 5a, 5b such that each of the divided regions is provided with the second heat exchanger. Although FIG. 10 shows an example in which the adsorption flow path 10 and the second heat exchanger 5 are divided into two in a direction orthogonal to the air flow, the adsorption flow path 10 and the second heat exchanger 5 may be divided into three or more.

In addition, the refrigeration cycle device includes a refrigerant flow path that switches the flow of the refrigerant such that, when either of the divided second heat exchangers 5a or 5b functions as the evaporator, the other divided second heat exchanger 5a or 5b does not function as the evaporator. That is, the second heat exchangers 5a and 5b are configured such that the flow of the refrigerant can be independently changed. FIG. 10 shows an example where, in the refrigerant flow path, the second decompressor 7 is installed in the middle of a pipe connecting the second heat exchangers 5a and 5b in series, the pipe is selectively connected to the second heat exchangers 5a and 5b such that the refrigerant which has passed through the condenser enters either one of the second heat exchangers 5a or 5b and exits from the other second heat exchanger, and opening/closing valves 17a, 17b, 17c, and 17d are installed in the pipe.

The refrigeration cycle device makes the second decompressor 7 narrow to allow either one of the second heat exchangers 5a or 5b to function as the condenser while the other second heat exchanger functions as the evaporator. According to this configuration, either of the second heat exchangers 5a or 5b functions as the evaporator and used for dehumidification, while the other second heat exchanger 5a or 5b can be defrosted at the same time. FIG. 10 shows a case where the opening/closing valves 17a and 17d are closed and the opening/closing valves 17b and 17c are opened such that the refrigerant is decompressed by the second decompressor 7 and enters the second heat exchanger 5a to be evaporated after the refrigerant that has flowed into the second heat exchanger 5b condenses.

In the refrigeration cycle device, when the amount of the frost adhering to the second heat exchanger 5a is increased, the opening and closing of the valves are switched such that the opening/closing valves 17a and 17d are opened and the opening/closing valves 17b and 17c are closed. Next, the second heat exchanger 5b is used for dehumidification, and the other second heat exchanger 5a is defrosted. As described above, according to the configuration, since either of the second heat exchangers 5 can always be frosted and used for dehumidification, excellent dehumidification can be continued without stopping. As a result, the CO₂ adsorption performance is improved.

It should be noted that, according to the configuration of FIG. 10, by opening (not decompressing) the second decompressor 7, both the second heat exchangers 5a and 5b can function as evaporators. In the dehumidification operation where frost does not adhere to the second heat exchangers 5a and 5b, defrosting is not required. Since all the divided second heat exchangers 5a and 5b serve as evaporators, the dehumidification performance is excellent.

In addition to the configuration of FIG. 10, the refrigerant flow path may be configured such that, for example, the second heat exchangers 5a and 5b are connected in parallel, and the refrigerant flows into either only one or both of the second heat exchangers 5a and 5b to function as evaporators. The performance during the defrosting operation is inferior to that of the configuration of FIG. 10, but the configuration is simpler, and the cost can be reduced. Therefore, the control is easier.

In addition, the CO₂ adsorption device includes dampers 19a and 19b that adjust the air flow passing through each of the plurality of second heat exchangers 5a and 5b divided in the adsorption flow path 10. The dampers 19a and 19b are basically the same as the damper 19 described in Embodiment 7. The dampers 19a and 19b are opened when the corresponding second heat exchangers 5a and 5b are used as evaporators for dehumidification, and the dampers 19a and 19b are closed to prevent high-humidity air flow from flowing to the adsorption material 1 when the corresponding second heat exchangers 5a and 5b do not function as evaporators. As a result, it is possible to prevent the deterioration of the performance of the adsorption material 1.

### Embodiment 9

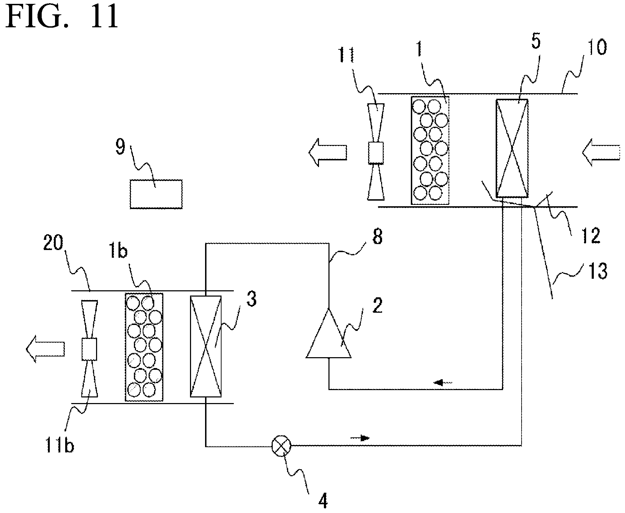

FIG. 11 is a configuration diagram of a CO₂ adsorption device according to Embodiment 9. In the CO₂ adsorption device of Embodiment 9, the first heat exchanger 3 that functions as the condenser of the CO₂ adsorption device of Embodiment 1 is used as a heat source for desorbing CO₂ from the adsorption material. In a case where the second heat exchanger 5 functions as the evaporator to perform dehumidification, the first heat exchanger 3 functions as the condenser to discharge heat.

The CO₂ adsorption device heats the solid adsorption material 1, which has adsorbed CO₂, in the air flow to desorb CO₂ from the adsorption material 1b. The adsorption material 1b having CO₂ adsorbed thereon is installed in a desorption flow path 20 such as a duct, and the desorption flow path 20 is configured to generate an air flow by a blower 11b. The white arrows in FIG. 11 indicate the flow of the air flow. When the air flow is generated in the desorption flow path 20, the blower 11b is not necessarily required, and the blower 11b may be installed on either the upstream side or the downstream side of the adsorption material 1b.

The first heat exchanger 3 is installed on the upstream side of the adsorption material 1b in which CO₂ is to be desorbed in the air flow in the desorption flow path 20 and performs heat exchange with the air flow in the desorption flow path 20. In the first heat exchanger 3, for example, fins are attached to a heat transfer pipe, thereby increasing the heat exchange area between the heat transfer pipe through which the refrigerant flows and the air. In a case where the first heat exchanger 3 functions as the condenser, the air flow in the desorption flow path 20 is heated. In a case where the air flow is heated, the adsorption material 1b is heated to a high temperature, and CO₂ which has been adsorbed is desorbed. In a case where the heating of only the first heat exchanger 3 does not reach a temperature sufficient to desorb CO₂, other heat sources may be used in combination.

In addition, it is preferable that the heat discharged from the first heat exchanger 3 can be utilized during the dehumidification operation when the second heat exchanger 5 functions as the evaporator, and it is not always necessary to utilize the heat discharged from the first heat exchanger 3 during the dehumidification operation. For example, a configuration may be adopted in which the refrigeration cycle device includes another heat exchanger (not shown) connected in parallel with the second heat exchanger 5, and either of the heat exchangers can be switched to function as the evaporator.

Similarly, it is not always necessary to utilize the discharged heat of the first heat exchanger 3 during the dehumidification operation of the second heat exchanger 5 for the desorption of CO₂. For example, a configuration may be adopted in which the refrigeration cycle device includes other heat exchangers (not shown) in parallel with the first heat exchanger 3, and any of the heat exchangers can be switched to function as the condenser.

In a case where the adsorption material 1b adsorbs moisture even when the desorption of CO₂ is performed, there is a concern that the CO₂ adsorption performance may deteriorate. Therefore, it is desirable that the humidity of the air flow flowing into the desorption flow path 20 is lower than the humidity of the air flow flowing into the adsorption flow path 10. For example, the CO₂ adsorption device may be configured to allow the air flow on the downstream side of the adsorption flow path 10 to flow into the desorption flow path 20.

As described above, in the CO₂ adsorption device of Embodiment 2, since the heat of the first heat exchanger 3, which functions as the condenser as a heat source for desorbing CO₂ from the adsorption material 1b having adsorbed CO₂, is used, the energy used for dehumidification can be effectively utilized.

Although the preferred embodiments have been described in detail above, the present invention is not limited to the above-described embodiments, and various modifications and substitutions can be made to the above-described embodiments without departing from the claims.

Hereinafter, various aspects of the present invention will be collectively described in the form of appendices.

### Appendix 1

A CO₂ adsorption device in which a solid adsorption material that adsorbs CO₂ is installed in a flow path through which gas flows, the CO₂ adsorption device including:
a refrigeration cycle device configured to circulate a refrigerant in a compressor, a first heat exchanger, a decompressor, and a second heat exchanger; and
a control device configured to control an operation of the refrigeration cycle device, in which
the second heat exchanger is installed on an upstream side of an air flow in the flow path with respect to a location where the adsorption material is installed,
the refrigeration cycle device performs a dehumidification operation of allowing the second heat exchanger to function as an evaporator to cause moisture contained in the air flow to adhere to a surface of the second heat exchanger, during an adsorption operation of adsorbing CO₂, and
the CO₂ adsorption device further includes a drain flow path that discharges water, which has fallen from the second heat exchanger, to an outside of the flow path, at a lower part of the second heat exchanger.

### Appendix 2

The CO₂ adsorption device according to Appendix 1, in which the control device controls the operation of the refrigeration cycle device based on a temperature and humidity of the air flow upstream of the second heat exchanger.

### Appendix 3

The CO₂ adsorption device according to Appendix 1 or 2, in which a total heat exchanger, which performs total heat exchange between the air flow flowing through the flow path and another air flow, is installed upstream of the second heat exchanger in the flow path.

### Appendix 4

The CO₂ adsorption device according to any one of Appendices 1 to 3, in which the second heat exchanger is a heat exchanger having fins in which a drainage hole or a drainage slit is formed, or is a finless heat exchanger.

### Appendix 5

The CO₂ adsorption device according to any one of Appendices 1 to 4, in which the first heat exchanger is a heat exchanger that performs heat exchange with water.

### Appendix 6

The CO₂ adsorption device according to Appendix 5, further including:
hot water supply equipment that supplies hot water inside a building, in which
the first heat exchanger heats the water of the hot water supply equipment when the first heat exchanger functions as the condenser.

### Appendix 7

The CO₂ adsorption device according to Appendix 5, further including:
water utilization equipment that utilizes water inside a building, in which
the first heat exchanger performs heat exchange with drained water discharged after being utilized in the water utilization equipment.

### Appendix 8

The CO₂ adsorption device according to any one of Appendices 1 to 7, in which
the refrigeration cycle device further includes a temperature-raising heat exchanger through which a fluid having a higher temperature than the second heat exchanger flows,
the temperature-raising heat exchanger is installed between the adsorption material and the second heat exchanger, and
the air flow, which has passed through the second heat exchanger and has been cooled, is allowed to pass through the temperature-raising heat exchanger to be heated.

### Appendix 9

The CO₂ adsorption device according to Appendix 8, in which the temperature-raising heat exchanger is a heat exchanger that performs heat exchange between the air flow upstream of the second heat exchanger and the air flow downstream of the second heat exchanger.

### Appendix 10

The CO₂ adsorption device according to Appendix 8, in which
the temperature-raising heat exchanger is a third heat exchanger through which the refrigerant of the refrigeration cycle device flows,
the refrigeration cycle device further includes a second decompressor, and the second decompressor is connected to such that the refrigerant, which has flowed through the third heat exchanger during the dehumidification operation, is decompressed by the second decompressor, and then flows to the second heat exchanger.

### Appendix 11

The CO₂ adsorption device according to any one of Appendices 1 to 10, further including: a switching valve that switches a flow direction of the refrigerant in the refrigeration cycle device such that a function of the first heat exchanger and a function of the second heat exchanger are switched between a condenser and an evaporator.

### Appendix 12

The CO₂ adsorption device according to Appendix 11, in which the control device allows the second heat exchanger to function as a condenser after the dehumidification operation of allowing the second heat exchanger to function as an evaporator is ended, and performs a temperature-raising operation of raising a temperature of the adsorption material that has been lowered by the dehumidification operation.

### Appendix 13

The CO₂ adsorption device according to Appendix 11, in which the control device performs, when the second heat exchanger functions as a condenser, the dehumidification operation of lowering a surface temperature of the second heat exchanger to a temperature below freezing to cause water vapor in the air flow to adhere to the second heat exchanger as frost, and then performs a defrosting operation of allowing the second heat exchanger to function as a condenser to remove the frost adhering to the second heat exchanger.

### Appendix 14

The CO₂ adsorption device according to any one of Appendices 1 to 13, further including: a movable shielding member that allows the air flow to pass through the second heat exchanger when the second heat exchanger functions as an evaporator, and that prevents the air flow from passing through the second heat exchanger when the second heat exchanger does not function as the evaporator.

### Appendix 15

The CO₂ adsorption device according to any one of Appendices 1 to 13, further including: a refrigerant flow path that switches a flow of the refrigerant such that, when a region of the flow path through which the air flow flows is divided into a plurality of regions, the second heat exchanger is divided into a plurality of second heat exchangers such that each of the divided regions is provided with the second heat exchanger, and either one of the divided second heat exchangers functions as an evaporator, the other divided second heat exchanger does not function as an evaporator.

### Appendix 16

The CO₂ adsorption device according to any one of Appendices 1 to 15, in which
the first heat exchanger is configured with heat exchangers connected in parallel,
the CO₂ adsorption device further includes a switching valve that switches a flow direction of the refrigerant in the refrigeration cycle device such that a function of the first heat exchanger and a function of the second heat exchanger are switched between a condenser and an evaporator, and
the CO₂ adsorption device further includes a refrigerant flow path that switches a flow of the refrigerant such that the refrigerant flows to either one of the heat exchangers connected in parallel when the second heat exchanger functions as an evaporator and the refrigerant flows to rest of the heat exchangers connected in parallel when the second heat exchanger functions as a condensation.

### Appendix 17

The CO₂ adsorption device according to any one of Appendices 1 to 16, wherein heat that is discharged when the first heat exchanger functions as a condenser is used as a heat source for desorbing CO₂ from the adsorption material that has adsorbed CO₂.

### Industrial Applicability

The CO₂ adsorption device according to the present invention is excellent in terms of energy saving.

### List of Reference Signs

1, 1b: Adsorption material
2: Compressor
3, 31, 31a, 31b: First heat exchanger
4: Decompressor
5, 5a, 5b: Second heat exchanger
6: Third heat exchanger
7: Second decompressor
8: Pipe
9: Control device
10: Adsorption flow path
11, 11b: Blower
12: Drain pan
13: Drain pipe
14: Switching valve
15a, 15b: Check valve
16, 26: Temperature-raising heat exchanger
17a, 17b, 17c, 17d: Opening/closing valves
19, 19a, 19b: Damper
20: Desorption flow path
21: Container
21a: Inflow port
21b: Outflow port
24: Water supply pipe
25: Drainage pipe
27: Water utilization equipment
30: Ventilation flow path
34, 35: Flow path
41, 43: Temperature sensor
42: Humidity sensor
50: Total heat exchanger

## Claims

1. A CO2 adsorption device in which a solid adsorption material that adsorbs CO2 is installed in a flow path through which gas flows, the CO2 adsorption device comprising:
a refrigeration cycle device configured to circulate a refrigerant in a compressor, a first heat exchanger, a decompressor, and a second heat exchanger; and
a control device configured to control an operation of the refrigeration cycle device, wherein
the second heat exchanger is installed on an upstream side of an air flow in the flow path with respect to a location where the adsorption material is installed,
the refrigeration cycle device performs a dehumidification operation of allowing the second heat exchanger to function as an evaporator to cause moisture contained in the air flow to adhere to a surface of the second heat exchanger, during an adsorption operation of adsorbing CO2, and
the CO2 adsorption device further comprises a drain flow path that discharges water, which has fallen from the second heat exchanger, to an outside of the flow path, at a lower part of the second heat exchanger.

2. The CO2 adsorption device according to Claim 1, wherein the control device controls the operation of the refrigeration cycle device based on a temperature and humidity of the air flow upstream of the second heat exchanger.

3. The CO2 adsorption device according to Claim 1 or 2, wherein a total heat exchanger, which performs total heat exchange between the air flow flowing through the flow path and another air flow, is installed upstream of the second heat exchanger in the flow path.

4. The CO2 adsorption device according to any one of Claims 1 to 3, wherein the second heat exchanger is a heat exchanger having fins in which a drainage hole or a drainage slit is formed, or is a finless heat exchanger.

5. The CO2 adsorption device according to any one of Claims 1 to 4, wherein the first heat exchanger is a heat exchanger that performs heat exchange with water.

6. The CO2 adsorption device according to Claim 5, further comprising:
hot water supply equipment that supplies hot water inside a building, wherein
the first heat exchanger heats the water of the hot water supply equipment when the first heat exchanger functions as a condenser.

7. The CO2 adsorption device according to Claim 5, further comprising:
water utilization equipment that utilizes water inside a building, wherein
the first heat exchanger performs heat exchange with drained water discharged after being utilized in the water utilization equipment.

8. The CO2 adsorption device according to any one of Claims 1 to 7, wherein
the refrigeration cycle device further includes a temperature-raising heat exchanger through which a fluid having a higher temperature than the second heat exchanger flows,
the temperature-raising heat exchanger is installed between the adsorption material and the second heat exchanger, and
the air flow, which has passed through the second heat exchanger and has been cooled, is allowed to pass through the temperature-raising heat exchanger to be heated.

9. The CO2 adsorption device according to Claim 8, wherein the temperature-raising heat exchanger is a heat exchanger that performs heat exchange between the air flow upstream of the second heat exchanger and the air flow downstream of the second heat exchanger.

10. The CO2 adsorption device according to Claim 8, wherein
the temperature-raising heat exchanger is a third heat exchanger through which the refrigerant of the refrigeration cycle device flows,
the refrigeration cycle device further includes a second decompressor, and
the second decompressor is connected such that the refrigerant, which has flowed through the third heat exchanger during the dehumidification operation, is decompressed by the second decompressor, and then flows to the second heat exchanger.

11. The CO2 adsorption device according to any one of Claims 1 to 10, further comprising:
a switching valve that switches a flow direction of the refrigerant in the refrigeration cycle device such that a function of the first heat exchanger and a function of the second heat exchanger are switched between a condenser and an evaporator.

12. The CO2 adsorption device according to Claim 11, wherein
the control device
allows the second heat exchanger to function as a condenser after the dehumidification operation of allowing the second heat exchanger to function as an evaporator is ended, and
performs a temperature-raising operation of raising a temperature of the adsorption material that has been lowered by the dehumidification operation.

13. The CO2 adsorption device according to Claim 11, wherein
the control device
performs, when the second heat exchanger functions as a condenser, the dehumidification operation of lowering a surface temperature of the second heat exchanger to a temperature below freezing to cause water vapor in the air flow to adhere to the second heat exchanger as frost, and
then performs a defrosting operation of allowing the second heat exchanger to function as a condenser to remove the frost adhering to the second heat exchanger.

14. The CO2 adsorption device according to any one of Claims 1 to 13, further comprising:
a movable shielding member
that allows the air flow to pass through the second heat exchanger when the second heat exchanger functions as the evaporator, and
that prevents the air flow from passing through the second heat exchanger when the second heat exchanger does not function as the evaporator.

15. The CO2 adsorption device according to any one of Claims 1 to 13, further comprising:
a refrigerant flow path that switches a flow of the refrigerant, such that,
when a region of the flow path through which the air flow flows is divided into a plurality of regions,
the second heat exchanger is divided into a plurality of second heat exchangers such that each of the divided regions is provided with the second heat exchanger, and
either one of the divided second heat exchangers functions as an evaporator, the other divided second heat exchanger does not function as an evaporator.

16. The CO2 adsorption device according to any one of Claims 1 to 15, wherein
the first heat exchanger is configured with heat exchangers connected in parallel,
the CO2 adsorption device further comprises a switching valve that switches a flow direction of the refrigerant in the refrigeration cycle device such that a function of the first heat exchanger and a function of the second heat exchanger are switched between a condenser and an evaporator, and
the CO2 adsorption device further comprises a refrigerant flow path that switches a flow of the refrigerant such that
the refrigerant flows to either one of the heat exchangers connected in parallel when the second heat exchanger functions as an evaporator, and
the refrigerant flows to rest of the heat exchangers connected in parallel when the second heat exchanger functions as a condensation.

17. The CO2 adsorption device according to any one of Claims 1 to 16, wherein heat that is discharged when the first heat exchanger functions as a condenser is used as a heat source for desorbing CO2 from the adsorption material that has adsorbed CO2.
